# EUROPEAN PATENT SPECIFICATION

(11) **EP 4 424 875 B1**
(45) Date of publication and mention of the grant of the patent: **18.02.2026**
(21) Application number: 24150103.0
(22) Date of filing: 02.01.2024
(51) Int. Cl.: C25B 1/04, C25B 9/21, C25B 15/08, C25C 1/08, C25C 7/06, H01M 10/34, H01M 10/42, H01M 10/54, C25B 1/02

(54) **METAL RECOVERY METHOD AND METAL RECOVERY DEVICE**
METALLRÜCKGEWINNUNGSVERFAHREN UND METALLRÜCKGEWINNUNGSVORRICHTUNG
PROCÉDÉ DE RÉCUPÉRATION DE MÉTAL ET DISPOSITIF DE RÉCUPÉRATION DE MÉTAL

(30) Priority: 20.01.2023 JP 2023007609
(43) Date of publication of application: 04.09.2024
(73) Proprietor: TOYOTA JIDOSHA KABUSHIKI KAISHA, Toyota-shi, Aichi-ken, 471-8571 (JP)
(72) Inventor: NAKANISHI, Haruyuki, Toyota-shi, 471-8571 (JP)
(74) Representative: D Young & Co LLP

(56) References cited:
- EP-A2- 4 411 024
- US-A- 4 085 017
- US-A- 4 470 894
- US-A1- 2014 027 301

## Description

### BACKGROUND OF THE INVENTION

### 1. Field of the Invention

The present disclosure relates to a metal recovery method and a metal recovery device.

### 2. Description of Related Art

In recent years, storage batteries, such as nickel-metal hydride storage batteries and so forth, have become popular as storage batteries for in-vehicle use and the like. One major usage of storage batteries is in hybrid electric vehicles and battery electric vehicles. Accordingly, as automobiles end their life cycles, great numbers of used storage batteries installed therein are left as waste. There is demand for reusing such used storage batteries as resources.

For example, a storage battery generally has a structure in which electrodes (cathode and anode), a separator, and an electrolytic solution are enclosed in an exterior casing. Materials containing metals such as cobalt (Co), nickel (Ni), and so forth (e.g., anode active materials such as nickel hydroxide, cobalt hydroxide, and so forth, which are used for anodes), are sometimes used in the electrodes. There is demand to recover and reuse metals contained in such electrodes, from the used storage batteries.

For example, Japanese Unexamined Patent Application Publication No. 2022-085446 (JP 2022-085446 A) discloses a method for recovering valuable metals (copper (Cu), Ni, Co, etc.), which includes a step of preparing a charge containing at least valuable metals as a raw material, a step of heating and melting the raw material to yield alloys and slag, and a step of separating out the slag to recover alloys containing valuable metal, in which metal aluminum is introduced into the raw material as a reductant at the time of heating and melting the raw material. US2014/027301 relates to recovering Cobalt from e.g. battery waste.

### SUMMARY OF THE INVENTION

It should be noted that there is demand in various fields to recover metals contained in members, from the perspective of reusing metals, which is not limited to storage batteries.

In view of such conventional demands, the present disclosure provides a metal recovery method and a metal recovery device capable of easily recovering Co component as metal Co.

The present invention is defined in the claims 1-10.

According to the present disclosure, a metal recovery method and a metal recovery device that can easily recover a Co component as metal Co can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic perspective view exemplifying a metal recovery device according to an embodiment of the present disclosure;
FIG. 2 is a schematic perspective view exemplifying a metal recovery device according to another embodiment of the present disclosure;
FIG. 3 is a schematic configuration diagram illustrating an example of a configuration of a nickel-metal hydride storage battery; and
FIG. 4 is a graph showing a voltage cycle in an experimental example.

### DETAILED DESCRIPTION OF EMBODIMENTS

A metal recovery method and a metal recovery device according to the present disclosure will be described below in detail with reference to the drawings. Each drawing shown below is schematically illustrated, and the sizes and shapes of the parts are exaggerated as appropriate, to facilitate understanding. In the present specification, when the terms "above" or "below" alone are used to describe how one member is disposed with respect to another member, this includes both a case in which the one member is disposed directly above or directly below the other member in such a manner that the one member is in contact with the other member, and a case in which the one member is disposed above or below the other member with still another member interposed therebetween, unless stated otherwise.

### Metal Recovery Method and Metal Recovery Device

The metal recovery device according to the present disclosure includes a power source, an electronic load, an electrolytic solution, a first tank that includes an anode connected to the power source and the electronic load and contains at least cobalt (Co), has a supply port and a discharge port for H₂O, and is immersed in the electrolytic solution, and a second tank that includes a cathode connected to the power source and the electronic load, has a supply port and the discharge port for H₂O, and is immersed in the electrolytic solution. Voltage is maintained by the power source and the electronic load so that the potential of the anode is higher than the potential of the cathode, thereby recovering Co eluted from the cathode.

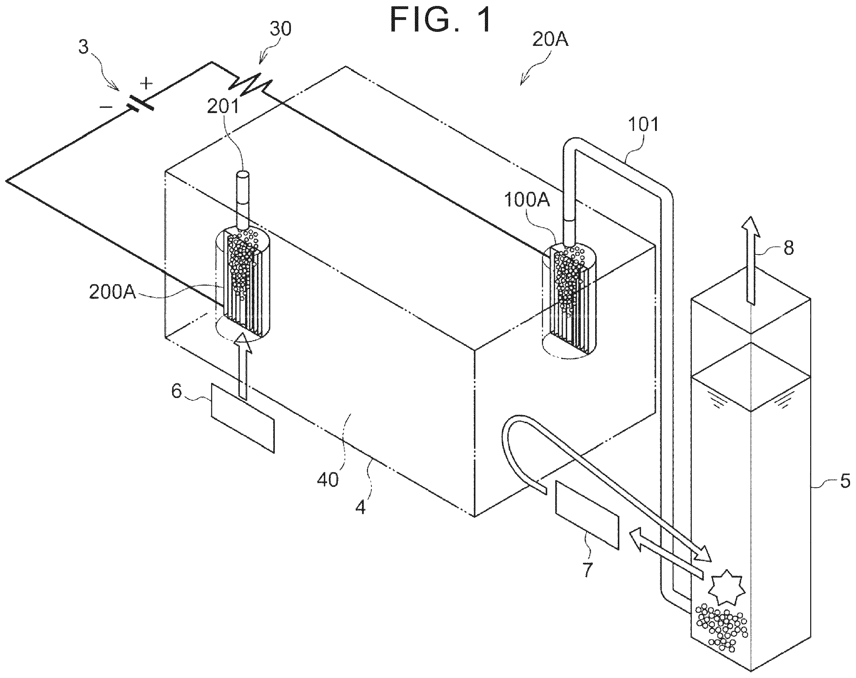

An embodiment of the metal recovery device according to the present disclosure will be described with reference to FIG. 1. FIG. 1 is a schematic perspective view exemplifying the metal recovery device according to the embodiment of the present disclosure. As illustrated in FIG. 1, a recovery device 20A includes a power source 3, an electronic load 30, a housing 4 containing an electrolytic solution 40, a first tank 100A and a second tank 200A immersed in the electrolytic solution 40 in the housing 4, and a distillation device 5. The power source 3 and the electronic load 30 adjust rising and falling of voltage so that a required voltage can be maintained. Note that a power source with a built-in electronic load function may be used. The first tank 100A has an anode containing Co and Ni, which is connected to the power source 3 and the electronic load 30. The second tank 200A has a cathode, which is connected to the power source 3 and the electronic load 30. The first tank 100A has a supply port (a first supply port) for water, a water supply pipe (omitted from illustration) equipped with a water supply pump is connected to this supply port, and water (H₂O) is supplied by driving the water supply pump (omitted from illustration). The second tank 200A has a supply port (a second supply port) for water, a water supply pipe (omitted from illustration) equipped with a water supply pump 6 is connected to this supply port, and water (H₂O) is supplied by driving the water supply pump 6. The first tank 100A has a discharge passage 101 (a first discharge port) for oxygen (O₂), and the discharge passage 101 is connected to the distillation device 5. The second tank 200A has a discharge passage 201 (a second discharge port) for hydrogen (H₂). An electrolytic solution is contained in the distillation device 5, and the electrolytic solution in the distillation device 5 and the electrolytic solution 40 in the housing 4 is circulated through circulation piping (omitted from illustration) equipped with a liquid feeding pump 7. The distillation device 5 has a discharge port 8 for water vapor (H₂O).

The recovery device 20A uses nickel-metal hydride storage batteries as each of the first tank 100A having the anode containing Co and Ni, and the second tank 200A having the cathode. This nickel-metal hydride storage battery may be a used nickel-metal hydride storage battery. Note that the term "used" means that the charge capacity of the battery is lower than that of the battery immediately after being manufactured.

In the recovery device 20A, the power source 3 and the electronic load 30 maintain the voltage such that the potential of the anode in the first tank 100A is higher than the potential of the cathode in the second tank 200A. Thus, water electrolysis reaction occurs in the water (H₂O) supplied to the first tank 100A and the second tank 200A, and O₂ gas is generated at the first tank 100A. The generated O₂ gas is sent to the distillation device 5 through the discharge passage 101, so as to be reduced with HCoO₂^{-,} which will be described later, and extracted from the discharge port 8 as water vapor (H₂O) at the distillation device 5. Also, water electrolysis reaction occurs in the second tank 200A, generating H₂ gas, and this H₂ gas is extracted from the discharge passage 201. From the perspective of efficiently causing the water electrolysis reaction to occur in the water (H₂O) supplied to the first tank 100A and the second tank 200A, the potential difference between the anode and the cathode preferably is maintained at no less than 1.48 V. Reaction formulas for the anode and the cathode are shown below.

(Anode) OH⁻ → 1/2H₂O + 1/4O₂ + e⁻

(Cathode) H₂O + e⁻ → 1/2H₂ + OH⁻

From the perspective of causing the water electrolysis reaction to proceed more readily, the potential difference obtained by subtracting the potential of the cathode in the second tank from the potential of the anode in the first tank is preferably in a range of no less than 1.48 V and no more than 2.00 V, and more preferably is in a range of no less than 1.55 V and no more than 1.80 V from the perspective of efficiency. Also, in this case, the temperature is preferably high, with the upper limit thereof being 80°C.

Also, in the recovery device 20A, the voltage is maintained by the power source 3 and the electronic load 30 such that the potential of the anode in the first tank 100A is higher than the potential of the cathode in the second tank 200A, whereby Co is eluted from the anode into the electrolytic solution 40 as HCoO₂⁻. The eluted HCoO₂⁻ is sent to the distillation device 5 by driving the liquid feeding pump 7, is oxidized by O₂ gas, thus enabling precipitation and recovery thereof as metal CoO₂. Note that some Co is extruded as a solid from the anode without being eluted, and this can also be recovered. Also, after the voltage is continuously maintained by the power source 3 and the electronic load 30 such that the potential of the anode is higher than the potential of the cathode, and Co and the like are completely eluted from the anode, Ni₂O₃ and Ni(OH)₂ remain at the anode, and accordingly can be recovered and separated from the anode as metal Ni. For example, Fe and Ni may remain at the anode, and metal Ni can be recovered by performing separation thereof in accordance with the difference in melting point. From the perspective of efficient elution of Co from the anode, the voltage at the anode is preferably maintained at no less than 0.60 V and no more than 1.00 V. Reaction formulas for elution of Co and residual Ni are shown below.

CoO₂ → Co(OH)₃ → Co(OH)₂ → Co

NiO₂ → 1/2Ni₂O₃ → Ni(OH)₂ → Ni

Note that the voltage may be repeatedly changed from the perspective of efficiently causing the water electrolysis reaction to occur and efficiently causing elution of Co from the anode. For example, the voltage may be maintained such that the potential difference between the anode and the cathode is no less than 1.48 V, and thereafter the voltage is maintained such that the voltage at the anode is no less than 0.60 V and no more than 1.00 V, which is then repeatedly performed. Thus, the water electrolysis reaction occurs more efficiently when the potential difference between the anode and the cathode is maintained at no less than 1.48 V, and on the other hand, elution of Co from the anode can be performed more efficiently when the voltage at the anode is maintained at no less than 0.60 V and no more than 1.00 V. For example, a cycle may be repeatedly performed, in which maintaining the voltage for 50 minutes in a state in which the potential difference between the anode and the cathode is no less than 1.48 V, and thereafter maintaining the voltage that is adjusted for 10 minutes in a state in which the voltage at the anode is no less than 0.60 V and no more than 1.00 V, make up one cycle.

Next, another embodiment will be described.

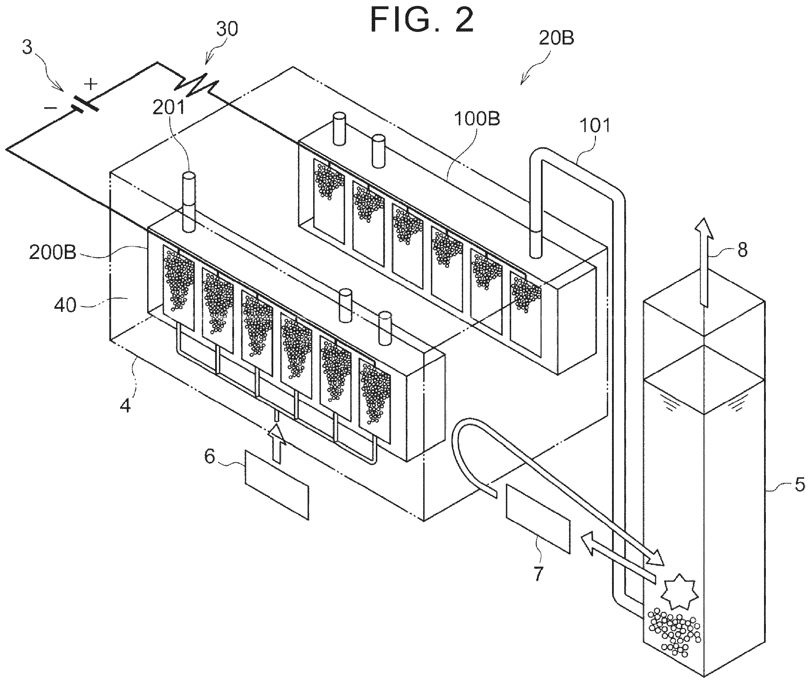

Another embodiment of the metal recovery device according to the present disclosure will be described with reference to FIG. 2. Note that configurations that are the same as those of the recovery device illustrated in FIG. 1 are denoted by the same signs. FIG. 2 is a schematic perspective view exemplifying the metal recovery device according to an embodiment of the present disclosure. As illustrated in FIG. 2, a recovery device 20B includes the power source 3, the electronic load 30, the housing 4 containing the electrolytic solution 40, a first tank 100B and a second tank 200B immersed in the electrolytic solution 40 in the housing 4, and the distillation device 5. In the recovery device 20B, a plurality of nickel-metal hydride storage batteries (a series of six nickel-metal hydride storage batteries in FIG. 2) is used for both the first tank 100B and the second tank 200B. The six nickel-metal hydride storage batteries in the first tank 100B each have an anode containing Co and Ni, and all of these anodes are connected to the power source 3 and the electronic load 30. The six nickel-metal hydride storage batteries in the second tank 200B each have a cathode, and all of these cathodes are connected to the power source 3 and the electronic load 30. The first tank 100B has a water supply port, a water supply pipe (omitted from illustration) equipped with a water supply pump (omitted from illustration) is connected to this supply port, and water (H₂O) is supplied by driving the water supply pump. The second tank 200B has a water supply port, a water supply pipe (omitted from illustration) equipped with the water supply pump 6 is connected to this supply port, and water (H₂O) is supplied by driving the water supply pump 6. The first tank 100B has the discharge passage 101 for oxygen (O₂), and the discharge passage 101 is connected to the distillation device 5. The second tank 200B has the discharge passage 201 for hydrogen (H₂). The electrolytic solution is contained in the distillation device 5, and the electrolytic solution in the distillation device 5 and the electrolytic solution 40 in the housing 4 is circulated through circulation piping (omitted from illustration) equipped with the liquid feeding pump 7. The distillation device 5 has the discharge port 8 for water vapor (H₂O).

In the recovery device 20B, the nickel-metal hydride storage batteries used in the first tank 100B and the second tank 200B may be used nickel-metal hydride storage batteries.

In the recovery device 20B, the power source 3 and the electronic load 30 maintain the voltage such that the potential of the anode in the first tank 100B is higher than the potential of the cathode in the second tank 200B. Thus, water electrolysis reaction occurs in the water (H₂O) supplied to the first tank 100B and the second tank 200B, and O₂ gas is generated at the first tank 100B. The generated O₂ gas is sent to the distillation device 5 through the discharge passage 101, so as to be reduced with HCoO₂^{-,} which will be described later, and extracted from the discharge port 8 as water vapor (H₂O) at the distillation device 5. Also, water electrolysis reaction occurs in the second tank 200B, generating H₂ gas, and this H₂ gas is extracted from the discharge passage 201. From the perspective of efficiently causing the water electrolysis reaction to occur in the water (H₂O) supplied to the first tank 100B and the second tank 200B, the potential difference between the anode and the cathode preferably is maintained at no less than 1.48 V. The potential difference between the anode and the cathode is preferably in a range of no less than 1.48 V and no more than 2.00 V, and more preferably is in a range of no less than 1.55 V and no more than 1.80 V. Also, the temperature is preferably high, with the upper limit thereof being 80°C.

In the recovery device 20B, the voltage is maintained by the power source 3 and the electronic load 30 such that the potential of the anode in the first tank 100B is higher than the potential of the cathode in the second tank 200B, whereby Co is eluted from the anodes of the six nickel-metal hydride storage batteries into the electrolytic solution 40 as HCoO₂⁻. The eluted HCoO₂⁻ is sent to the distillation device 5 by driving the liquid feeding pump 7, is oxidized by O₂ gas, thus enabling precipitation and recovery thereof as metal CoO₂. Note that some Co is extruded as a solid from the anode without being eluted, and this can also be recovered. Also, after the voltage is continuously maintained by the power source 3 and the electronic load 30, and Co and the like are completely eluted from the anodes of the six nickel-metal hydride storage batteries, Ni₂O₃ and Ni(OH)₂ remain at the anodes, and accordingly can be recovered from the anode as metal Ni. From the perspective of efficient elution of Co from the anode, the voltage at the anode is preferably maintained at no less than 0.60 V and no more than 1.00 V.

Note that the voltage may be repeatedly changed from the perspective of efficiently causing the water electrolysis reaction to occur and efficiently causing elution of Co from the anode. For example, maintaining the voltage such that the potential difference between the anode and the cathode is no less than 1.48 V (e.g., maintained for 50 minutes), and thereafter maintaining the voltage such that the voltage at the anode is no less than 0.60 V and no more than 1.00 V (e.g., maintained for 10 minutes), may be repeated. Thus, the water electrolysis reaction occurs more efficiently when the potential difference between the anode and the cathode is maintained at no less than 1.48 V, and on the other hand, elution of Co from the anode can be performed more efficiently when the voltage at the anode is maintained at no less than 0.60 V and no more than 1.00 V.

As described above, according to the metal recovery method and the metal recovery device of the present disclosure, Co contained in the anode can be easily recovered as metal Co (i.e., pure Co). Further, when Ni is contained in the anode, this Ni can be easily recovered as metal Ni (i.e., pure Ni).

In the present disclosure, nickel-metal hydride storage batteries can be applied to one or both of the first tank and the second tank. This nickel-metal hydride storage battery may be a used nickel-metal hydride storage battery. That is to say, according to the present disclosure, Co and Ni contained in the anodes of used nickel-metal hydride storage batteries can be easily recovered as metal Co and metal Ni.

According to the present disclosure, the voltage applied to water (H₂O) supplied to the first tank and the second tank by the power source and the electronic load is maintained such that the potential of the anode is higher than the potential of the cathode (e.g., the potential difference between the anode and the cathode is maintained at no less than 1.48 V), thereby causing water electrolysis reaction to occur, and O₂ gas generated at the first tank and H₂ gas generated at the second tank can be extracted. Also, maintaining the voltage such that the potential of the anode is higher than the potential of the cathode by the power source and the electronic load (e.g., maintaining the voltage of the anode at no less than 0.60 V and no more than 1.00 V) enables Co and Ni contained in the anode to be recovered as metal Co and metal Ni. Thus, in the metal recovery method and the metal recovery device according to the present disclosure, the Co and Ni contained in the anode can be recovered as metal Co and metal Ni, while causing water electrolysis reaction to occur and extracting O₂ gas and H₂ gas. Accordingly, from the perspective of electrical energy maintained by the power source and the electronic load, the electrical energy required for extracting O₂ gas and H₂ gas by the water electrolysis reaction can also be used to recover metals contained in the anode, and accordingly energy consumption can be reduced.

### Preferred Embodiment

### • Electrolytic Solution

From the perspective of increasing the efficiency of recovering metal Co and metal Ni, the electrolytic solution in which the first tank and the second tank are immersed preferably has a pH value of 14 or higher, more preferably 15 or higher, and even more preferably 16 or higher. The pH value is a value measured using a pH meter at 25°C.

The electrolytic solution preferably is an aqueous electrolytic solution, although not limited thereto in particular. An alkaline aqueous solution or the like, for example, can be suitably used as the aqueous electrolytic solution. Alkaline aqueous solutions contain, for example, water and an alkali metal hydroxide dissolved in water. The concentration of the alkali metal hydroxide may be, for example, 1 mol/L to 45 mol/L. Examples of alkali metal hydroxides include potassium hydroxide (KOH), sodium hydroxide (NaOH), lithium hydroxide (LiOH) and the like.

### • Voltage

From the perspective of efficiently causing the water electrolysis reaction, the voltage is preferably maintained such that the potential difference between the anode and the cathode is no less than 1.48 V. On the other hand, from the perspective of efficient elution of Co from the anode, the voltage at the anode is preferably maintained at no less than 0.60 V and no more than 1.00 V. Accordingly, maintaining the potential difference between the anode and the cathode at no less than 1.48 V (e.g., maintained for 50 minutes), and thereafter maintaining the voltage that is adjusted such that the voltage at the anode is no less than 0.60 V and no more than 1.00 V (e.g., maintained for 10 minutes), may be repeated.

### • Water supply

Water (H₂O) is preferably supplied to both of the first tank and the second tank from below (from the direction of gravity toward the direction against gravity), from the perspective of ease of extracting the generated O₂ gas and H₂ gas. For example, supplying from bottom faces of the tanks toward top faces thereof by capillary action is preferable.

### • Distance

The distance between the first tank and the second tank is preferably no less than 0 cm and no more than 5 cm, more preferably no less than 0 cm and no more than 1 cm, from the perspective of facilitating water electrolysis reaction. Note that the phrase "distance between the first tank and the second tank" refers to the shortest distance between the first tank and the second tank.

In the recovery devices 20A and 20B illustrated in FIGS. 1 and 2, the temperature and pressure in the distillation device 5 is preferably lower as compared to the temperature and pressure in the housing 4, from the perspective of transportability of the O₂ gas generated at the first tank 100B to the distillation device 5. Also, from the same perspective, the distillation device 5 is preferably disposed at a lower position in the direction of gravity than the position at which the housing 4 is disposed.

### Nickel-metal Hydride Storage Battery

Now, nickel-metal hydride storage batteries that can be used for the first tank and the second tank will be described. Note that the nickel-metal hydride storage batteries (hereinafter may be abbreviated to "batteries") may be, for example, used nickel-metal hydride storage batteries, which have been used as batteries for mobile equipment, batteries for in-vehicle use, storage batteries for renewable energy generation, and so forth.

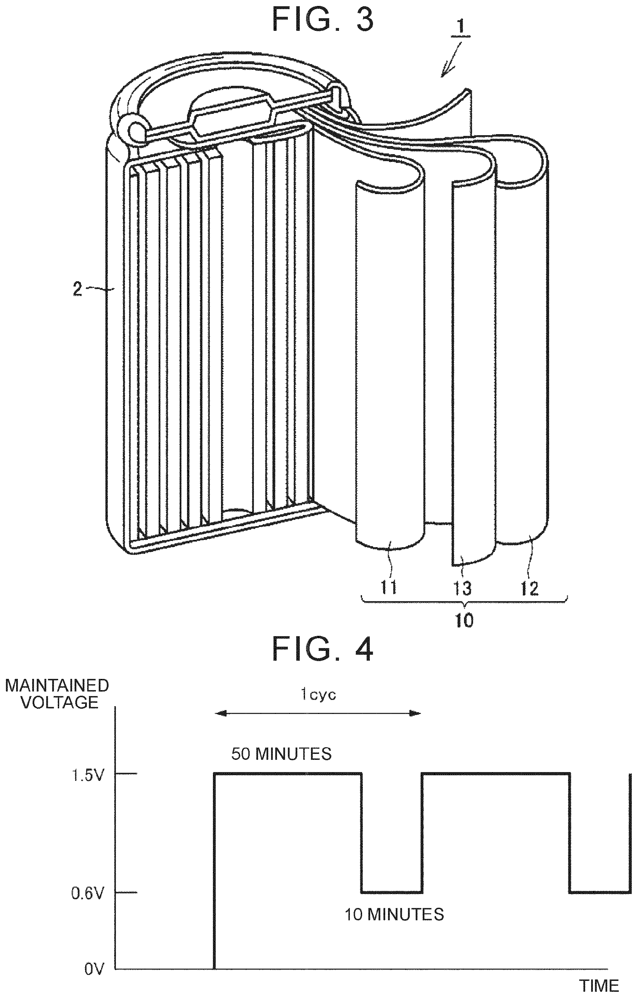

FIG. 3 is a schematic configuration diagram illustrating an example of a configuration of a nickel-metal hydride storage battery. A battery 1 is a nickel-metal hydride storage battery. The battery 1 includes a housing 2. The housing 2 is a cylindrical case. The housing 2 is made of metal. Note, however, that the housing 2 can have any form. The housing 2 may be, for example, a rectangular case. The housing 2 may be, for example, a pouch or the like made of an aluminum laminate film. The housing 2 may be, for example, made of resin.

The housing 2 accommodates a power storage element 10 and an electrolytic solution. The power storage element 10 includes an anode 11, a cathode 12, and a separator 13. The power storage element 10 that is illustrated is a spiral-wound type. The power storage element 10 is formed by spirally winding strip-shaped electrodes. The power storage element 10 may be of a laminated type, for example. The power storage element 10 may be formed by stacking sheet-like electrodes, for example.

### Cathode

The cathode 12 is sheet-like. The cathode 12 may have a thickness of, for example, 10 µm to 1 mm. The cathode 12 has a lower potential than the anode 11.

The cathode includes, for example, a cathode current collector and a cathode active material. Examples of the cathode current collector include a nickel mesh and so forth. Examples of the cathode active material include hydrogen absorbing alloys. The composition of the hydrogen absorbing alloy is not limited, as long as storing and releasing hydrogen can be performed. Examples of hydrogen absorbing alloys include Mm-Ni-Mn-Al-Co alloys. "Mm" indicates a mixture of rare earth elements called mischmetal.

### Anode

The anode 11 is sheet-like. The anode 11 may have a thickness of, for example, 10 µm to 1 mm. The anode 11 has a higher potential than the cathode 12. The anode 11 contains an anode active material. The anode active material can contain any component. Examples of the anode active material include nickel hydroxide (Ni(OH)₂), cobalt hydroxide (Co(OH)₂), manganese dioxide, silver oxide, and so forth. The anode active material is preferably nickel hydroxide.

The anode 11 may essentially be made of the anode active material alone. The anode 11 may further include a current collector, an electroconductive material, a binder, and so forth, in addition to the anode active material. The current collector may include, for example, a porous metal sheet or the like. The current collector is made of Ni, for example.

For example, the anode 11 can be formed by coating a current collector with the anode active material, the electroconductive material, and the binder. The electroconductive material has electronic conductivity. The electroconductive material can contain any component. The electroconductive material may contain, for example, carbon black, Co, cobalt oxide, or the like. The content of the electroconductive material may be 0.1 parts by mass to 10 parts by mass, for example, as to 100 parts by mass of the anode active material. The binder binds the current collector and the anode active material. The binder can contain any component. The binder may include, for example, ethylene-vinyl acetate (EVA) or the like. The content of the binder may be 0.1 parts by mass to 10 parts by mass, for example, as to 100 parts by mass of the anode active material.

### Separator

The separator 13 is sheet-like. The separator 13 is disposed between the anode 11 and the cathode 12. The separator 13 physically separates the anode 11 and the cathode 12. The separator 13 may have a thickness of, for example, 50 µm to 500 µm. The separator 13 is porous. The separator 13 may contain, for example, a stretched porous membrane, a non-woven fabric, or the like. The separator 13 is electrically insulating. The separator may be made of, for example, polyolefin, polyamide, or the like.

### Electrolytic Solution

The electrolytic solution is preferably an aqueous electrolytic solution, although not limited thereto in particular. An alkaline aqueous solution or the like, for example, can be suitably used as the aqueous electrolytic solution. Alkaline aqueous solutions contain, for example, water and an alkali metal hydroxide dissolved in water. The concentration of the alkali metal hydroxide may be, for example, 1 mol/L to 20 mol/L. Examples of alkali metal hydroxides include potassium hydroxide (KOH), sodium hydroxide (NaOH), lithium hydroxide (LiOH) and the like.

Now, whether any metal Co was recovered by the metal recovery device according to the embodiments of the present disclosure was confirmed by experimentation.

### Experimental Example 1

A recovery device was prepared having the same configuration as the recovery device 20A illustrated in FIG. 1, with the anode in the first tank and the cathode in the second tank connected to the power source and the electronic load, using the following items as the electrolytic solution, the first tank and the second tank, and the anode in the first tank.
Electrolytic solution: potassium hydroxide (KOH · aq, pH 15)
First tank and second tank: Nickel-metal hydride storage battery
Anode of first tank: electrode containing Co(OH₂) and Ni(OH₂) as anode active materials.

In this recovery device, water (H₂O) was supplied from a water supply pump to the first tank and the second tank, and the potential of the anode in the first tank was maintained so as to be higher than the potential of the cathode in the second tank, by the power source and the electronic load. Specifically, as shown in the graph in FIG. 4, the potential difference between the anode and the cathode was maintained at 1.53 V/cell for 50 minutes, following which the voltage was adjusted so that the anode voltage was 0.60 V/cell which was maintained for 10 minutes, and repetition of this maintaining of voltage was continued for 15 hours. After starting to maintain the voltage, discharge of oxygen (O₂) gas from the first tank to the distillation device through the discharge passage, and discharge of hydrogen (H₂) gas from the discharge passage of the second tank, were confirmed.

### • Elution of Co into Electrolytic Solution

After continuing to maintain the voltage for the above amount of time, confirmation was made regarding whether Co was eluted in the electrolytic solution circulating through the distillation device and the housing by the liquid feeding pump. As a result, it was confirmed that 3.1% by mass (1.2 atomic %) of Co was eluted into the electrolytic solution. Thus, in Experimental Example 1, it was confirmed that Co was eluted into the electrolytic solution, i.e., it was confirmed that metal Co could be recovered.

Also, in Experimental Example 1, Ni and Fe were detected when the elements remaining in the anode of the first tank were analyzed after the voltage was maintained for the above amount of time. That is to say, it was confirmed that metal Ni can be separated and recovered.

## Claims

1. A metal recovery method comprising
causing a metal recovery device (20A, 20B) that includes
a power source (3),
an electronic load (30),
an electrolytic solution (40),
a first tank (100A, 100B) that includes an anode (11), a first supply port for H₂O and a first discharge port (101), and that is immersed in the electrolytic solution (40), the anode (11) being connected to the power source (3) and the electronic load (30) and containing at least Co, and
a second tank (200A, 200B) that includes a cathode (12), a second supply port for H₂O and a second discharge port (201), and that is immersed in the electrolytic solution (40), the cathode (12) being connected to the power source (3) and the electronic load (30),
to recover Co eluted from the anode (11) by maintaining voltage by the power source (3) and the electronic load (30) such that a potential of the anode (11) is higher than a potential of the cathode (12).

2. The method according to claim 1, wherein the anode (11) contains Ni, and
the method further comprises recovering residual Ni in the anode (11) by maintaining the voltage by the power source (3) and the electronic load (30) such that the potential of the anode (11) is higher than the potential of the cathode (12).

3. The method according to claim 1, wherein at least one of the first tank (100A, 100B) and the second tank (200A, 200B) is a nickel-metal hydride storage battery.

4. The method according to claim 3, wherein the nickel-metal hydride storage battery is a used storage battery.

5. The method according to claim 1, further comprising maintaining the voltage such that water electrolysis reaction occurs, extracting O₂ gas from the first tank (100A, 100B), and extracting H₂ gas from the second tank (200A, 200B).

6. A metal recovery device (20A, 20B), comprising:
a power source (3);
an electronic load (30);
an electrolytic solution (40);
a first tank (100A, 100B) that includes an anode (11), a first supply port for H₂O and a first discharge port (101), and that is immersed in the electrolytic solution (40), the anode (11) being connected to the power source (3) and the electronic load (30) and contains at least Co; and
a second tank (200A, 200B) that includes a cathode (12), a second supply port for H₂O and a second discharge port (201), and that is immersed in the electrolytic solution (40), the cathode (12) being connected to the power source (3) and the electronic load (30), wherein
the metal recovery device (20A, 20B) is configured to recover Co eluted from the anode (11) by maintaining voltage by the power source (3) and the electronic load (30) such that a potential of the anode (11) is higher than a potential of the cathode (12).

7. The metal recovery device (20A, 20B) according to claim 6, wherein the anode (11) contains Ni, and
the metal recovery device (20A, 20B) is configured to recover residual Ni in the anode (11) by maintaining the voltage by the power source (3) and the electronic load (30) such that the potential of the anode (11) is higher than the potential of the cathode (12).

8. The metal recovery device (20A, 20B) according to claim 6, wherein at least one of the first tank (100A, 100B) and the second tank (200A, 200B) is a nickel-metal hydride storage battery.

9. The metal recovery device (20A, 20B) according to claim 8, wherein the nickel-metal hydride storage battery is a used storage battery.

10. The metal recovery device (20A, 20B) according to claim 6, wherein the metal recovery device (20A, 20B) is configured to maintain the voltage such that water electrolysis reaction occurs, extract O₂ gas from the first tank (100A, 100B), and extract H₂ gas from the second tank (200A, 200B).

## Patentansprüche

1. Metallrückgewinnungsverfahren, das umfasst Bewirken, dass eine Metallrückgewinnungsvorrichtung (20A, 20B), die einschließt
eine Stromquelle (3),
eine elektronische Last (30),
eine Elektrolytlösung (40),
einen ersten Tank (100A, 100B), der eine Anode (11), einen ersten Versorgungsanschluss für H₂O und einen ersten Entladeanschluss (101) einschließt und der in die Elektrolytlösung (40) eingetaucht ist, wobei die Anode (11) mit der Stromquelle (3) und der elektronischen Last (30) verbunden ist und mindestens Co enthält, und
einen zweiten Tank (200A, 200B), der eine Kathode (12), einen zweiten Versorgungsanschluss für H₂O und einen zweiten Entladeanschluss (201) einschließt und der in die Elektrolytlösung (40) eingetaucht ist, wobei die Kathode (12) mit der Stromquelle (3) und der elektronischen Last (30) verbunden ist,
Co rückgewinnt, das von der Anode (11) eluiert wird, indem eine Spannung durch die Stromquelle (3) und die elektronische Last (30) aufrechterhalten wird, so dass ein Potential der Anode (11) höher als ein Potential der Kathode (12) ist.

2. Verfahren nach Anspruch 1, wobei die Anode (11) Ni enthält, und
wobei das Verfahren ferner ein Rückgewinnen von restlichem Ni in der Anode (11) umfasst, indem die Spannung durch die Stromquelle (3) und die elektronische Last (30) aufrechterhalten wird, so dass das Potential der Anode (11) höher als das Potential der Kathode (12) ist.

3. Verfahren nach Anspruch 1, wobei mindestens eines von dem ersten Tank (100A, 100B) und dem zweiten Tank (200A, 200B) eine Nickel-Metallhydrid-Speicherbatterie ist.

4. Verfahren nach Anspruch 3, wobei die Nickel-Metallhydrid-Speicherbatterie eine verwendete Speicherbatterie ist.

5. Verfahren nach Anspruch 1, das ferner das Aufrechterhalten der Spannung, so dass eine Wasserelektrolysereaktion auftritt, Extrahieren von O₂-Gas aus dem ersten Tank (100A, 100B) und Extrahieren von H₂-Gas aus dem zweiten Tank (200A, 200B) umfasst.

6. Metallrückgewinnungsvorrichtung (20A, 20B), die umfasst:
eine Stromquelle (3);
eine elektronische Last (30);
eine Elektrolytlösung (40);
einen ersten Tank (100A, 100B), der eine Anode (11), einen ersten Versorgungsanschluss für H₂O und einen ersten Entladeanschluss (101) einschließt und der in die Elektrolytlösung (40) eingetaucht ist, wobei die Anode (11) mit der Stromquelle (3) und der elektronischen Last (30) verbunden ist und mindestens Co enthält; und
einen zweiten Tank (200A, 200B), der eine Kathode (12), einen zweiten Versorgungsanschluss für H₂O und einen zweiten Entladeanschluss (201) einschließt und der in die Elektrolytlösung (40) eingetaucht ist, wobei die Kathode (12) mit der Stromquelle (3) und der elektronischen Last (30) verbunden ist, wobei
die Metallrückgewinnungsvorrichtung (20A, 20B) dazu ausgelegt ist, Co rückzugewinnen, das von der Anode (11) eluiert wird, indem eine Spannung durch die Stromquelle (3) und die elektronische Last (30) aufrechterhalten wird, so dass ein Potential der Anode (11) höher als ein Potential der Kathode (12) ist.

7. Metallrückgewinnungsvorrichtung (20A, 20B) nach Anspruch 6, wobei die Anode (11) Ni enthält und
die Metallrückgewinnungsvorrichtung (20A, 20B) dazu ausgelegt ist, restliches Ni in der Anode (11) rückzugewinnen, indem die Spannung durch die Stromquelle (3) und die elektronische Last (30) aufrechterhalten wird, so dass das Potential der Anode (11) höher als das Potential der Kathode (12) ist.

8. Metallrückgewinnungsvorrichtung (20A, 20B) nach Anspruch 6, wobei mindestens eines von dem ersten Tank (100A, 100B) und dem zweiten Tank (200A, 200B) eine Nickel-Metallhydrid-Speicherbatterie ist.

9. Metallrückgewinnungsvorrichtung (20A, 20B) nach Anspruch 8, wobei die Nickel-Metallhydrid-Speicherbatterie eine verwendete Speicherbatterie ist.

10. Metallrückgewinnungsvorrichtung (20A, 20B) nach Anspruch 6, wobei die Metallrückgewinnungsvorrichtung (20A, 20B) dazu ausgelegt ist, die Spannung aufrechtzuerhalten, so dass eine Wasserelektrolysereaktion auftritt, O₂-Gas aus dem ersten Tank (100A, 100B) zu extrahieren und H₂-Gas aus dem zweiten Tank (200A, 200B) zu extrahieren.

## Revendications

1. Procédé de récupération de métal, comprenant la mise en œuvre d'un dispositif de récupération de métal (20A, 20B) qui comporte
une source d'énergie électrique (3),
une charge électronique (30),
une solution électrolytique (40),
une première cuve (100A, 100B) qui comporte une anode (11), un premier passage d'alimentation en H₂O et un premier passage d'évacuation (101), et qui est immergée dans la solution électrolytique (40), l'anode (11) étant connectée à la source d'énergie électrique (3) et à la charge électronique (30) et contenant au moins du Co, et une deuxième cuve (200A, 200B) qui comporte une cathode (12), un deuxième passage d'alimentation en H₂O et un deuxième passage d'évacuation (201), et qui est immergée dans la solution électrolytique (40), la cathode (12) étant connectée à la source d'énergie électrique (3) et à la charge électronique (30),
afin de récupérer le Co par élution depuis l'anode (11) par maintien de la tension par la source d'énergie électrique (3) et de la charge électronique (30) de sorte qu'un potentiel de l'anode (11) soit supérieur à un potentiel de la cathode (12).

2. Procédé selon la revendication 1, dans lequel l'anode (11) contient du Ni, et
le procédé comprenant en outre la récupération du Ni résiduel dans l'anode (11) par maintien de la tension par la source d'énergie électrique (3) et de la charge électronique (30) de sorte que le potentiel de l'anode (11) soit supérieur au potentiel de la cathode (12).

3. Procédé selon la revendication 1, dans lequel au moins l'une de la première cuve (100A, 100B) et de la deuxième cuve (200A, 200B) est une batterie de stockage nickel-hydrure métallique.

4. Procédé selon la revendication 3, dans lequel la batterie de stockage nickel-hydrure métallique est une batterie de stockage usagée.

5. Procédé selon la revendication 1, comprenant en outre le maintien de la tension de sorte qu'une réaction d'électrolyse de l'eau se produise, entraînant l'extraction de gaz O₂ de la première cuve (100A, 100B) et l'extraction de gaz H₂ de la deuxième cuve (200A, 200B).

6. Dispositif de récupération de métal (20A, 20B), comprenant :
une source d'énergie électrique (3) ;
une charge électronique (30) ;
une solution électrolytique (40) ;
une première cuve (100A, 100B) qui comporte une anode (11), un premier passage d'alimentation en H₂O et un premier passage d'évacuation (101), et qui est immergée dans la solution électrolytique (40), l'anode (11) étant connectée à la source d'énergie électrique (3) et à la charge électronique (30) et contenant au moins du Co ; et
une deuxième cuve (200A, 200B) qui comporte une cathode (12), un deuxième passage d'alimentation en H₂O et un deuxième passage d'évacuation (201), et qui est immergée dans la solution électrolytique (40), la cathode (12) étant connectée à la source d'énergie électrique (3) et à la charge électronique (30),
le dispositif de récupération de métal (20A, 20B) étant configuré pour récupérer le Co par élution depuis l'anode (11) en maintenant la tension par la source d'énergie électrique (3) et la charge électronique (30) de sorte qu'un potentiel de l'anode (11) soit supérieur à un potentiel de la cathode (12).

7. Dispositif de récupération de métal (20A, 20B) selon la revendication 6, dans lequel l'anode (11) contient du Ni, et
le dispositif de récupération de métal (20A, 20B) étant configuré pour récupérer le Ni résiduel dans l'anode (11) en maintenant la tension par la source d'énergie électrique (3) et la charge électronique (30) de sorte que le potentiel de l'anode (11) soit supérieur au potentiel de la cathode (12).

8. Dispositif de récupération de métal (20A, 20B) selon la revendication 6, dans lequel au moins l'une de la première cuve (100A, 100B) et de la deuxième cuve (200A, 200B) est une batterie de stockage nickel-hydrure métallique.

9. Dispositif de récupération de métal (20A, 20B) selon la revendication 8, dans lequel la batterie de stockage nickel-hydrure métallique est une batterie de stockage usagée.

10. Dispositif de récupération de métal (20A, 20B) selon la revendication 6, le dispositif de récupération de métal (20A, 20B) étant configuré pour maintenir la tension de sorte qu'une réaction d'électrolyse de l'eau se produise, entraînant l'extraction de gaz O₂ de la première cuve (100A, 100B) et l'extraction de gaz H₂ de la deuxième cuve (200A, 200B).
